# FASCICULE DE BREVET EUROPEEN

(11) **EP 4 466 130 B1**
(45) Date de publication et mention de la délivrance du brevet: **24.09.2025**
(21) Numéro de dépôt: 23700835.4
(22) Date de dépôt: 13.01.2023
(51) Int. Cl.: B29C 49/02, B29C 49/50, B65D 1/02, B29L 31/00, B29C 49/48

(54) **RÉCIPIENT SOUPLE EN MATIÈRE PLASTIQUE, PROCÉDÉ DE FABRICATION D'UN TEL RÉCIPIENT**
FLEXIBLER BEHÄLTER AUS KUNSTSTOFF, VERFAHREN ZUR HERSTELLUNG EINES SOLCHEN BEHÄLTERS
FLEXIBLE CONTAINER MADE OF PLASTICS MATERIAL, PROCESS FOR MANUFACTURING A CONTAINER OF THIS KIND

(30) Priorité: 17.01.2022 FR 2200352
(43) Date de publication de la demande: 27.11.2024
(73) Titulaire: Ublo, 44330 La Regrippière (FR)
(72) Inventeur: ELEFTHERIOU, Stylianos, 78160 Marly le roi (FR)
(74) Mandataire: Lequien, Philippe
(86) Numéro de dépôt international: PCT/EP2023/050770
(87) Numéro de publication internationale: WO 2023/135268

(56) Documents cités:
- AU-B2- 659 617
- JP-A- H05 294 347
- US-A1- 2011 303 673
- US-A1- 2012 061 407
- US-A1- 2012 175 338

## Description

Le domaine de l'invention est celui de la conception et de la fabrication de récipients en plastique pour le conditionnement de produits.

Plus précisément, l'invention concerne en particulier, un récipient en matière plastique, un procédé d'obtention dudit récipient ainsi qu'un moule pour la mise en œuvre dudit procédé.

Depuis de nombreuses années, les habitudes de consommation ont considérablement évolué.

Les repas, qui étaient le plus souvent pris à table et offraient un moment de convivialité et d'échange, se sont raccourcis et sont devenus l'occasion de cumuler une autre activité en même temps, comme regarder la télévision ou même lire.

Cela est le plus souvent visible sur les repas de la mi-journée, durant lesquels les salariés déjeunent tout en continuant de travailler ou en effectuant des achats.

Les repas ont alors été transformés de sorte que les fourchettes, couteaux et autres ustensiles adaptés à la consommation de produits ne soient plus utiles ou presque. A titre d'exemple, les sandwichs ont vite trouvé leur place en remplacement des repas nécessitant l'utilisation de couverts.

Un autre exemple largement répandu est observé pour les compotes ou les crèmes dessert qui habituellement sont conditionnées dans des pots fermés par un opercule. Pour faciliter la consommation de ces produits, les pots ont été en partie remplacées par des récipients sous forme de gourdes souples qui permettent en outre un transport aisé du produit à consommer. L'utilisation de récipients en forme de gourdes est d'ailleurs très avantageux pour permettre aux enfants de consommer des fruits lors du goûter, cela de façon ludique.

Ce type de récipient est généralement réalisé par l'assemblage de plusieurs feuillets de film plastique complexe. Ce film plastique complexe comprend généralement une couche de polyéthylène téréphtalate (PET), une couche d'aluminium et une couche de polyéthylène (PE). Les feuillets sont soudés les uns aux autres pour former une cavité dans laquelle est reçu le produit à consommer.

Les feuillets sont généralement pourvus d'un revêtement barrière à l'oxygène (par exemple de l'aluminium), afin d'éviter l'oxydation du produit à consommer, cette oxydation pouvant changer les qualités nutritives, l'aspect et/ou la saveur du produit à consommer.

La gourde contenant le produit à consommer, présente également un col formant organe d'aspiration.

Les organes d'aspiration (souvent désignés par leur nom anglais « spout ») comprennent un corps duquel s'élève un col qui forme une paille d'aspiration du produit à consommer.

Cet organe d'aspiration, généralement obtenu par injection et/ou moulage de matière plastique, est rapporté en haut de la cavité de la gourde et les feuillets métalliques sont soudés sur le corps, refermant ainsi la cavité.

Le récipient rempli du produit à consommer est alors hermétiquement obturé par l'intermédiaire de moyens d'obturation pouvant prendre la forme d'un opercule ou d'un bouchon, lui-même rapporté sur le col.

Toutefois, si ce type de récipient présente un avantage particulier dans la facilité de consommation et de transport du produit, il demeure compliqué à fabriquer et encore plus compliqué à recycler, ce qui engendre des problèmes de traitement des déchets, donc de pollution.

En effet, l'organe d'aspiration en matière plastique doit être séparé des feuillets pour permettre le recyclage séparé de chacune des matières. Dans les faits, il a été constaté que cette séparation n'est jamais réalisée, ou quasiment.

En outre, les feuillets sont recouverts, sur une première face tournée vers l'extérieur, d'une couche imprimée permettant l'affichage d'une marque, d'un logo, d'un dessin, ou d'une composition nutritionnelle par exemple, et, sur une deuxième face opposée tournée vers l'intérieur du récipient, du revêtement barrière à l'oxygène. Ce revêtement est appliqué sur le feuillet métallique et doit être retiré pour permettre le bon recyclage du feuillet.

Dans les faits, si la séparation de l'organe d'aspiration par rapport aux feuillets peut être réalisée de manière rapide, le recyclage des feuillets est plus compliqué par la présence de la couche d'aluminium et des encres, les feuillets étant alors généralement incinérés sans être recyclés réellement, ce qui ne limite que partiellement la pollution.

Par ailleurs, si la couche de revêtement barrière est importante pour protéger le produit de l'oxydation, cette protection n'est en réalité pas totale.

En effet, l'organe d'aspiration, par sa composition en matière plastique, reste poreux à l'air, ce qui peut engendrer une oxydation du produit situé dans le col. Or, c'est cette partie du produit qui est la première consommée. Dès lors, la consommation d'un produit oxydé, même en très faible quantité, peut rebuter un consommateur qui n'achètera alors plus ce type de produit, voire ne commencera même pas la consommation du récipient qu'il vient d'ouvrir.

Pour pallier à cet inconvénient, une co-injection avec un matériau barrière sur l'organe d'aspiration pourrait alors être prévu, mais cette étape s'avère difficile de mise en œuvre et particulièrement coûteuse.

De plus, ce type de récipient en forme de gourde ne permet pas une consommation totale du produit qu'il contient.

En effet, une quantité de produit résiduel reste par exemple coincé au niveau des jonctions entre les différents feuillets métalliques, c'est-à-dire au niveau des soudures, et à la jonction entre l'organe d'aspiration et les feuillets métalliques.

Selon des mesures réalisées, la quantité de produit résiduel, c'est-à-dire de produit non consommé, restant à l'intérieur du récipient une fois ce dernier consommé est comprise entre 8 et 10 % en moyenne de la quantité de produit initialement présente dans le récipient.

En outre, le coût de fabrication de récipients en forme de gourde s'avère important et demande à être réduit.

Ce coût important s'explique notamment par :
- l'assemblage de plusieurs pièces pour produire la gourde capable de reposer en équilibre sur son fond, à savoir l'organe d'aspiration et les différents feuillets ;
- la quantité de plastique nécessaire pour réaliser l'organe d'aspiration qui doit présenter une surface suffisante afin de permettre le soudage des feuillets métalliques,
- l'utilisation d'un film aluminisé complexe pour produire les feuillets métalliques.

Il est donc nécessaire de disposer d'une machine pour la fabrication des organes d'aspiration, d'une machine pour la réalisation du fils complexe constituant les feuillets métalliques, et, enfin, d'une autre machine pour la fabrication des poches (à partir des feuillets métalliques et des organes d'aspiration.

Ces coûts de fabrication étant reportés dans le prix d'achat par les consommateurs, ces derniers, qui souhaitent maîtriser leur budget, peuvent alors facilement se tourner vers des produits moins chers et plus respectueux de l'environnement tels que les pots en verre ou les pots en plastiques classiques même si cela réduit leur liberté de mouvement.

L'invention a notamment pour objectif de pallier les inconvénients de l'art antérieur.

Plus précisément, l'invention a pour objectif de proposer un récipient souple, simple de fabrication et dont la pollution qu'il peut engendrer est limité relativement aux récipients de l'art antérieur.

L'invention a également pour objectif de fournir un tel récipient permettant de limiter la quantité de produit résiduel, c'est-à-dire de limiter la quantité de produit restant dans le récipient après consommation.

L'invention a en outre pour objectif de fournir un tel récipient permettant de protéger le produit d'une dégradation de ses qualités nutritives, de son aspect et/ou de sa saveur.

Récipients selon le préambule de la revendication 1 sont connus de AU 659 617 B2, US 2012/175338 A1, US 2012/061407 A1. Une technique de fabrication de récipients pertinente est décrite dans US 2011/303673 A1.

Ces objectifs, ainsi que d'autres qui apparaîtront par la suite, sont atteints grâce à l'invention qui a pour objet un récipient obtenu par soufflage d'un tube, le récipient comprenant un corps s'étendant, selon un axe longitudinal, entre un fond et un col venus de matière avec le corps, le récipient dans lequel le corps présente, en hauteur selon l'axe longitudinal, une paroi dont l'épaisseur est comprise entre 0,05 mm et 0,4 mm, et en ce que le col présente, en hauteur selon l'axe longitudinal, une paroi dont l'épaisseur est comprise entre 0,4 mm et 0,8 mm, et en ce que le tube est obtenu par roulage d'une feuille de matière plastique, et en ce que le corps définit une première façade et une deuxième façade reliées l'une à l'autre par une portion de liaison à chacune de leurs extrémités, la première façade présentant une soudure du tube roulé.

Un tel récipient peut ainsi être obtenu de manière simple à partir d'une feuille de matériau plastique qui est roulée en tube puis soufflée.

Un tel récipient est donc plus simple d'obtention que ceux de l'art antérieur, mais également plus respectueux de l'environnement puisqu'il n'est pas nécessaire de séparer les différents éléments qui le composent pour assurer son recyclage. Cela s'explique notamment par le fait que le col et le fond sont venus de matière avec le corps du récipient.

En outre, l'utilisation d'un même matériau pour la fabrication globale du récipient permet de limiter les coûts d'exploitation et de fabrication puisqu'il n'est pas nécessaire de stocker des organes d'aspiration (ou sa matière constitutive) d'une part et du matériau constitutif de la poche d'autre part.

En d'autres termes, l'utilisation d'un même matériau et l'obtention d'un récipient à partir d'un tube roulé permet un stockage de la matière constitutive des récipients selon l'invention sous forme d'une bobine (ou d'un rouleau) de feuille plastique.

Par ailleurs, de telles épaisseurs de la paroi du corps permettent de faciliter la déformation du récipient lors de l'aspiration par un consommateur du produit contenu.

L'épaisseur du col, quant à elle, permet de conserver une bonne résistance mécanique du col aux efforts de pression exercées par les lèvres de l'utilisateur lors de l'aspiration, et assure le maintien du bouchon, par exemple par vissage ou clipsage.

Il en résulte alors une faible quantité de produit résiduel dans le récipient après consommation.

A titre d'exemple, grâce aux épaisseurs comprises entre 0,05 et 0,4 mm pour la paroi du corps, il a été constaté une diminution comprise entre 30% et 50 % de la quantité de produit résiduel par rapport aux récipients de l'art antérieur.

En outre, pour sa fabrication, un récipient selon l'invention nécessite une quantité de matière inférieure comparativement aux récipients de l'art antérieur.

Le tube étant obtenu par roulage d'une feuille de matière plastique, il est permis de supprimer un espace de stockage alloué au stockage de préformes vides destinées à être soufflées pour former les récipients. Ainsi, les coûts de fabrication du récipient selon l'invention peuvent être réduits comparativement à la fabrication de récipients à partir de tubes déjà formés qu'il est nécessaire de stocker en attendant leur transformation en récipients.

La présence de la première façade et de la deuxième façade permet de définir ou de conférer au récipient une forme de gourde semblable à celle des gourdes de l'art antérieur, facilitant ainsi la consommation du produit et limitant de fait la quantité de produit résiduel dans le récipient après consommation.

Selon un autre aspect avantageux, chacune de la première façade et de la deuxième façade présente une épaisseur décroissante depuis une portion centrale vers chacune des deux portions de liaisons.

L'évolution de l'épaisseur de la première façade et de la deuxième façade, assure, dans la portion centrale, une résistance mécanique importante permettant à l'utilisateur d'exercer une pression pour vider le contenu et faciliter l'aspiration du produit. Cela offre également un aspect qualitatif au récipient pour l'utilisateur.

Selon un autre aspect avantageux, le fond présente deux panneaux articulés l'un par rapport à l'autre autour d'une charnière, chaque panneau s'étendant entre la charnière et l'une de la première façade et de la deuxième façade, la charnière reliant les deux portions de liaisons.

Un tel fond permet de faciliter la déformation du récipient lors de l'aspiration, ce qui favorise la vidange du récipient, c'est-à-dire le retrait du produit qu'il contient.

En d'autres termes, l'utilisateur n'a pas à injecter d'air dans le récipient pour permettre l'écoulement du produit. L'utilisateur peut donc directement aspirer le produit, ce qui déforme l'emballage et provoque l'extraction de la totalité du produit contenu, ou quasiment.

En effet, en combinaison avec les faibles épaisseurs de la paroi du corps, le fond permet une déformation importante du récipient pour en limiter son volume interne et donc favoriser l'extraction du produit qu'il contient.

Selon un autre aspect avantageux, le récipient est réalisé dans un matériau présentant des propriétés d'herméticité à l'oxygène.

Cela permet de limiter l'oxydation du produit contenu dans le récipient, du fond jusqu'à une embouchure du col par lequel le produit peut être extrait du récipient.

A l'inverse des solutions de l'art antérieur, même le produit contenu dans le col est protégé d'une oxydation à l'air, ce qui bénéficie à la qualité nutritive, à l'aspect et à la saveur du produit contenu dans le récipient, et aspiré par le consommateur.

Selon un autre aspect avantageux, le col présente un diamètre compris entre 8mm et 12mm, et une hauteur comprise entre 5mm et 50mm.

Un col présentant un diamètre et une hauteur selon les gammes précitées permet d'améliorer l'aspiration du produit contenu dans le récipient.

Cela s'explique par le fait qu'un tel col forme une paille permettant d'amplifier, à l'intérieur du récipient, la dépression induite par l'effort d'aspiration du consommateur.

L'invention concerne également un procédé de fabrication d'un récipient tel que précédemment décrit, le procédé comprenant les étapes consistant à :
- former un tube en roulant et soudant une feuille sur elle-même,
- introduire le tube dans un moule,
- fermer le moule,
- souffler le tube dans le moule pour obtenir un récipient,
le tube présentant un diamètre strictement supérieur à un diamètre du col du récipient à obtenir.

Un tel procédé permet de former un récipient répondant aux critères de limitation de la pollution et de facilité de vidange souhaités, cela de manière simple et rapide.

Par ailleurs, par la formation d'un tube servant de préforme à la réalisation du récipient, l'espace de stockage et la mise en œuvre du procédé sont simplifiés. La réalisation d'un tube à partir d'une feuille permet d'éviter le transport de préformes vides, supprimant, de fait, l'espace de stockage nécessaire.

En effet, il n'est pas nécessaire d'approvisionner une machine de fabrication par différents matériaux pour former les différents éléments du récipient. Les préformes sont directement fabriquées selon les cadences de fabrication, par roulage d'une feuille sur elle-même pour former les tubes devenant les préformes de réalisation des récipients.

En outre, le diamètre du col inférieur au diamètre du tube permet d'obtenir un col résistant dans lequel la matière plastique n'est pas étirée, ou quasiment, puisqu'elle est simplement écrasée et conserve une épaisseur identique, ou quasiment, à l'épaisseur de la feuille d'origine, contrairement au corps qui est lui soufflé et dont l'épaisseur varie.

De plus, une telle épaisseur du col offre un aspect qualitatif au récipient, ainsi qu'une facilité de consommation du produit contenu dans le récipient puisque, lorsque l'utilisateur aspire, le col n'a pas tendance à s'écraser, ce qui formerait une barrière à l'écoulement du produit et empêchant alors la consommation de produit.

De préférence, préalablement à l'étape consistant à introduire le tube dans un moule, le procédé comprend une étape consistant à chauffer le tube formé.

La chauffe du tube préalablement à son insertion dans le moule permet de rendre le tube plus malléable pour faciliter son étirage, de sorte que sa matière constitutive vienne épouser la cavité de moulage. Ainsi, le récipient obtenu présente les formes souhaitées, au bénéfice de son aspect qualitatif.

L'invention concerne également un moule pour la mise en œuvre du procédé tel que précédemment décrit, le moule comprenant deux demi-moules mobiles l'un par rapport à l'autre entre :
- une position ouverte dans laquelle les deux demi-moules sont écartées l'un de l'autre pour permettre l'insertion d'un tube à souffler ou le retrait d'un récipient formé, et
- une position fermée dans laquelle les deux demi-moules définissent entre eux une cavité de moulage à l'empreinte du récipient à obtenir,
caractérisé en ce que le moule comprend des moyens de découpe de la matière constitutive du tube, les moyens de découpe comprenant une bordure délimitant, au moins partiellement un contour de la cavité de moulage, et une surface de découpe contre laquelle la bordure vient en appui dans la position fermée des deux demi-moules pour découper la matière constitutive du tube à partir duquel le récipient est formé.

Un tel moule permet, outre le soufflage, de découper directement la matière superflue, c'est-à-dire la matière en trop, entre le tube formant la préforme et le récipient final obtenu.

Ainsi, il n'est pas nécessaire en sortie de moule de réaliser une étape de finition pour ébavurer le récipient ainsi obtenu. Autrement dit, un tel moule permet de former un col plus petit que le tube d'origine et de fermer le récipient en partie basse, c'est-à-dire au niveau de son fond.

En outre, cela permet de réaliser de manière rapide le récipient par simple fermeture du moule qui vient former au moins une partie du récipient par écrasement et découpe, le reste du récipient étant obtenu par le soufflage.

Selon un aspect avantageux, chaque demi-moule intègre au moins un insert amovible destiné à former une partie de la cavité de moulage, chaque insert portant une partie des moyens de découpe.

L'utilisation d'un insert amovible permet d'adapter le moule à différentes formes de récipients à réaliser.

En effet, il n'est pas nécessaire de changer l'intégralité du moule pour fabriquer une série spéciale, seule une partie du moule, c'est-à-dire l'insert, peut être changé pour permettre, par exemple, d'augmenter la taille du col ou de former un fond différent en fonction du produit à consommer ou d'un design souhaité.

Selon un autre aspect avantageux, chaque demi-moule intègre deux inserts amovibles dont :
- un premier insert destiné à former une partie au moins du col du récipient, et
- un deuxième insert destiné à former une partie au moins du fond du récipient,
chacun du premier insert et du deuxième insert portant une partie des moyens de découpe.

L'utilisation d'un premier insert destiné à former une partie au moins du col du récipient et d'un deuxième insert destiné à former une partie au moins du fond du récipient permet de faciliter la production de récipients selon l'invention, et d'adapter le moule en fonction du type de récipient à fabriquer. Il est ici précisé que, selon les techniques actuelles, même si un moule est composé de plusieurs éléments, ces éléments n'ont pas vocation à être démontés, le changement d'une partie du moule entraînant alors le changement du moule dans sa totalité.

De plus, cela permet de faciliter la maintenance d'une machine de fabrication et notamment des moules puisque, en cas de défaut ou d'endommagement de l'un des moules ou d'une partie du moule, seule une partie du moule peut être changée.

D'autres caractéristiques et avantages de l'invention apparaîtront plus clairement à la lecture de la description suivante d'au moins un mode de réalisation préférentiel de l'invention, donné à titre d'exemple illustratif et non limitatif, et des dessins annexés parmi lesquels :
[Fig.1] la [Fig.1] est une représentation schématique en perspective de dessus d'un récipient selon l'invention ;
[Fig.2] la [Fig.2] est une représentation schématique vue de côté d'un récipient selon l'invention ;
[Fig.3] la [Fig.3] est une représentation schématique en section, selon un plan transversal médian, du récipient selon l'invention ;
[Fig.4] la [Fig.4] est une représentation schématique en perspective de dessus d'un ensemble de production de récipients selon l'invention, et
[Fig.5] la [Fig.5] est une représentation schématique de face d'un demi-moule de l'ensemble de production de récipients selon l'invention, illustré par la [Fig.3].

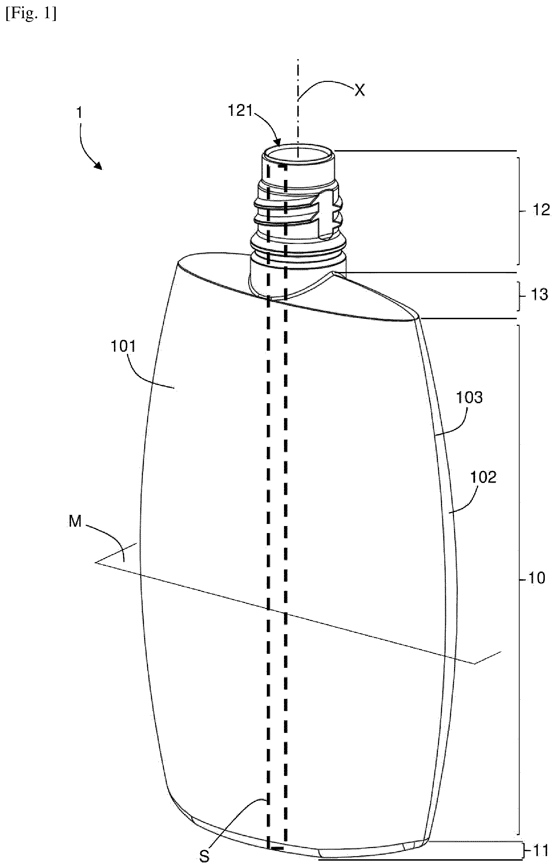

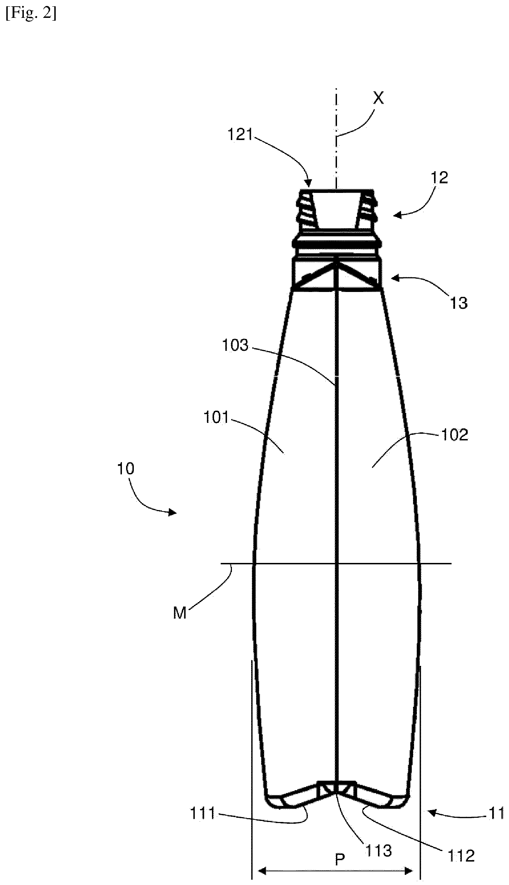

Les figures 1 et 2 illustrent un récipient 1 selon l'invention.

Le récipient 1 comprend un corps 10 s'étendant, selon un axe longitudinal X, entre un fond 11 et un col 12.

Plus précisément, le col 12 est relié au corps 10 par l'intermédiaire d'une épaule 13. Cette épaule 13 relie donc le corps 10 au col 12 et assure une continuité de matière entre deux parties du récipient 1, qui présentent des dimensions différentes, orthogonalement à l'axe longitudinal X.

En particulier, le corps 10 présente des dimensions supérieures aux dimensions du col 12.

Selon le mode de réalisation illustré par les figures 1 et 2, le corps 10 présente une forme sensiblement ovale en section transversale et le col 12 présente une forme sensiblement circulaire en section transversale.

Le corps 10, le fond 11 et le col 12 sont venus de matière.

Plus particulièrement, le corps 10, le fond 11, le col 12 et l'épaule 13 sont venus de matière, c'est-à-dire qu'ils sont réalisés dans un même matériau sans assemblage les uns avec les autres.

En référence à la [Fig.2], le corps 10 définit une première façade 101 et une deuxième façade 102 reliées l'une à l'autre par une portion de liaison 103 à chacune de leurs extrémités, radialement à l'axe longitudinal X.

La portion de liaison 103 s'étend avantageusement sur l'épaule 13. La portion de liaison 103 s'étend avantageusement jusqu'au col 12.

Plus précisément, le récipient 1 comprend deux portions de liaison 103 qui sont en regard l'une de l'autre, et forment chacune un bord latéral du récipient 1.

En d'autres termes, les deux portions de liaison 103 sont écartées l'une de l'autre d'une largeur L définissant une largeur du récipient 1.

Tel qu'on le voit sur la [Fig.1], les deux portions de liaison 103 sont arquées, de sorte que la largeur L du récipient soit évolutive le long de l'axe longitudinal X.

La largeur L croît ainsi depuis le col 12 du récipient 1 en direction du fond 11 jusqu'à un plan médian M, transversal à l'axe longitudinal X, auquel la largeur L du récipient atteint sa taille maximale avant de diminuer depuis le plan médian M en direction du fond 11.

Selon une direction perpendiculaire à la largeur L et orthogonalement à l'axe longitudinal X, le récipient 1 présente une profondeur P mesurée entre la première façade 101 et la deuxième façade 102.

Cette profondeur P est également évolutive le long de l'axe longitudinal X d'une part et sur la périphérie de la paroi du corps 10, entre les deux portions de liaison 103, d'autre part.

En d'autres termes, la première façade 101 et la deuxième façade 102 présentent chacune un profil bombé qui, combiné avec la forme arquée des portions de liaison 103, fait évoluer à la fois la largeur L et la profondeur P du corps 10 du récipient 1 le long de et orthogonalement à l'axe longitudinal X.

Les récipients 1 selon l'invention sont particulièrement adaptés pour contenir de faibles volumes de produit, par exemple 50ml, 100ml ou encore 200ml.

A titre d'exemple illustratif et non limitatif, un récipient 1 présente un col 12 ayant un diamètre compris entre 8mm et 12mm pour une hauteur comprise entre 5mm et 50mm, et un corps ayant une largeur L maximale comprise entre 50mm et 54mm, et une profondeur P maximale comprise entre 16mm et 20mm. La hauteur totale du récipient 1, mesurer le long de l'axe longitudinal X est par exemple comprise entre 70mm et 90mm.

Tel que cela est schématiquement illustré par la [Fig.1], la première façade 101 présente une soudure S. Comme cela sera expliqué par la suite, la soudure S est issue de la réalisation d'un tube T formant une préforme pour l'obtention du récipient 1.

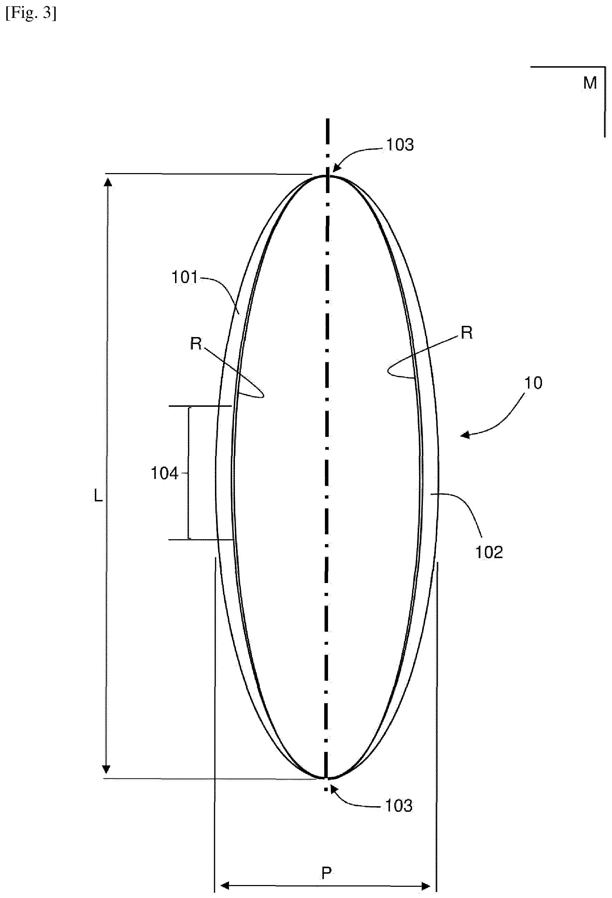

En référence à la [Fig.3], le corps 10 présente, en hauteur selon l'axe longitudinal X, une paroi dont l'épaisseur est comprise entre 0,05 mm et 0,4 mm.

Tel que cela est visible sur la [Fig.3], chacune de la première façade 101 et de la deuxième façade 102 présente une épaisseur décroissante depuis une portion centrale 104 vers chacune des deux portions de liaison 103.

En d'autres termes, l'épaisseur de la paroi du corps 10, va en s'épaississant depuis une première portion de liaison 103 en direction de la portion centrale 104 puis en s'amincissant depuis ladite portion centrale 104 vers la deuxième portion de liaison 103.

Le col 12 présente, quant à lui, en hauteur selon l'axe longitudinal X, une paroi dont l'épaisseur est comprise entre 0,4 mm et 0,8 mm.

En référence à la [Fig.2], le fond 11 présente deux panneaux 111, 112 articulés l'un par rapport à l'autre autour d'une charnière 113.

Chaque panneau 111, 112 s'étend entre la charnière 113 et l'une de la première façade 101 et de la deuxième façade 102. La charnière 113 relie en outre les deux portions de liaison 103.

Plus particulièrement, le fond 11 présente :
- un premier panneau 111 s'étendant entre la charnière 113 et la première façade 101,
- un deuxième panneau 112 s'étendant entre la charnière 113 et la deuxième façade 102.

Le matériau constitutif du récipient 1 présente des propriétés d'herméticité à l'oxygène. Ces propriétés sont par exemple obtenues par l'ajout d'une couche de matériau barrière (EVOH) dans la feuille de base, par exemple sous la forme d'un sandwich comprenant une couche de matériau barrière entre de couches de base.

Ce matériau de base est par exemple du polypropylène (PP) ou du polyéthylène (PE). Le sandwich peut alors comprendre une couche de polypropylène (PP) et une couche de polyéthylène (PE), ou alors deux couches de polypropylène (PP) ou de polyéthylène (PE).

Tel qu'illustré sur la [Fig.3], de manière schématique, grâce aux propriétés d'herméticité à l'oxygène, le récipient 1 présente un revêtement R destiné à former une barrière au passage de l'oxygène depuis l'extérieur du récipient 1 vers l'intérieur.

Sur la [Fig.3], la barrière à l'oxygène est schématiquement représentée par une couche de matériau barrière, vers l'intérieur du récipient 1. La barrière à l'oxygène est invisible à l'œil nu puisque présentant une épaisseur de l'ordre de 20µm à 30µm sur le tube T avant soufflage, de sorte que la barrière à l'oxygène soit formée par le récipient 1 lui-même. En réalité, la couche de matériau barrière est, comme précisé précédemment, intermédiaire, c'est-à-dire qu'elle ne forme pas une face externe ou interne du récipient 1.

Cette barrière à l'oxygène est avantageusement continue sur toute la hauteur du récipient 1.

En d'autres termes, la barrière à l'oxygène s'étend à la fois sur le col 12, l'épaule 13, le corps 10 et le fond 11.

Le produit contenu dans le récipient 1 est ainsi intégralement protégé d'une oxydation par l'air.

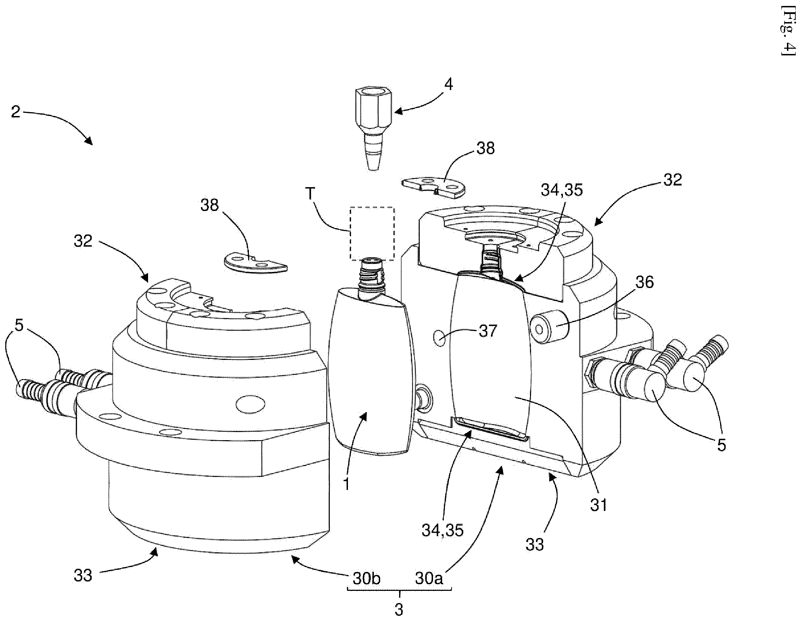

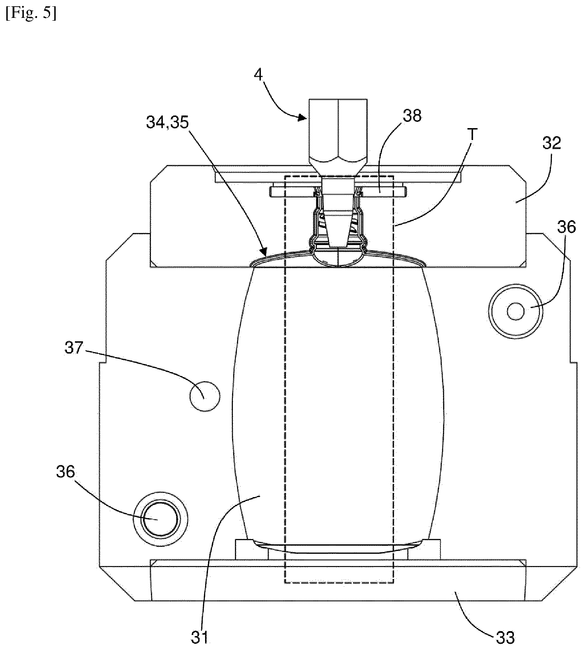

En référence aux figures 4 et 5, un moule 3 est à présent décrit. Ce moule 3 permet la réalisation de récipients 1 tel que précédemment décrit.

Le moule 3 comprend, tel qu'illustré par la [Fig.4], deux demi-moules 30a, 30b, mobiles l'un par rapport à l'autre.

Plus précisément, le moule 3 comprend un premier demi-moule 30a et un deuxième demi-moule 30b qui sont mobiles l'un par rapport à l'autre entre :
- une position ouverte dans laquelle les deux demi-moules 30a, 30b sont écartés l'un de l'autre, et
- une position fermée dans laquelle les deux demi-moules 30a, 30b définissant entre eux une cavité de moulage à l'empreinte du récipient 1 à obtenir.

Tel que cela est décrit par la suite, dans la position ouverte, les deux demi-moules 30a, 30b permettent l'insertion d'un tube T à souffler pour obtenir un récipient 1 ou, au contraire, le retrait d'un récipient 1 formé.

Chaque demi-moule 30a, 30b présente une réserve 31. La réunion de la réserve 31 de chacun des demi-moules 30a, 30b permet de former en partie la cavité de moulage du moule 3.

Le moule 3 comprend également des moyens de découpe de la matière constitutive du tube T formant la préforme du récipient 1.

Les moyens de découpe, tel que cela est visible sur les figures 4 et 5, comprennent une bordure 34 délimitant, au moins partiellement, un contour du récipient 1 à obtenir, et une surface de découpe 35 contre laquelle la bordure 34 vient en appui dans la position fermée des deux demi-moules 30a, 30b, pour découper et souder la matière constitutive du tube T.

Selon une forme de réalisation illustrée par les figures 4 et 5, les moyens de découpe sont portés par chacun du premier demi-moule 30a et du premier demi-moule 30b.

Plus particulièrement, la bordure 34 n'est pas continue et est portée en partie par le premier demi-moule 30a et en partie par le deuxième demi-moule 30b.

De même, le deuxième demi-moule 30b et le premier demi-moule 30a présentent chacun une partie de la surface de découpe 35. En d'autres termes, le deuxième demi-moule 30b et le premier demi-moule 30a présentent chacun une alternance de bordures 34 et de surfaces de découpe 35.

Selon une variante non illustrée par les figures, la bordure 34 est continue et portée par l'un seulement du premier demi-moule 30a et du deuxième demi-moule 30b, et la surface de découpe 35 est également continue et portée uniquement par l'autre du deuxième demi-moule 30b et du premier demi-moule 30a.

Tel que cela est illustré par les figures 4 et 5, chaque demi-moule 30a, 30b intègre au moins un insert 32, 33 amovible et destiné à former une partie de la cavité de moulage.

Chaque insert 32, 33 porte une partie des moyens de découpe.

Plus précisément, selon le mode de réalisation illustré par les figures 4 et 5, chacun du premier demi-moule 30a et du deuxième demi-moule 30b intègre deux inserts 32, 33 amovibles.

Plus particulièrement, chaque demi-moule 30a, 30b intègre:
- un premier insert 32 destiné à former une partie au moins du col 12 du récipient 1 et,
- un deuxième insert 33 destiné à former une partie au moins du fond 11 du récipient 1.

Comme évoqué précédemment, chacun du premier insert 32 et du deuxième insert 33 porte une partie des moyens de découpe.

Plus précisément, le premier insert 32 et le deuxième insert 33portent chacun une partie de la bordure 34.

En outre, chacun du premier demi-moule 30a et du deuxième demi-moule 30b présente au moins un pion 36 et au moins une cavité 37, chaque pion du premier demi-moule 30a étant destiné à être reçu dans une cavité 37 du deuxième demi-moule 30b, et inversement, chaque pion du deuxième demi-moule 30b est destiné à être reçu dans une cavité 37 du premier demi-moule 30a.

La coopération entre chaque pion 36 et une cavité 37 permet d'assurer la fermeture du moule 3, et notamment la mise en position fermée du premier demi-moule 30a et du deuxième demi-moule 30b afin de former une cavité de moulage à l'empreinte du récipient 1 à obtenir.

En outre, les pions 36 et les cavités 37 permettent de guider le passage du moule 3 de sa position ou le passage du premier demi-moule 30a et du deuxième demi-moule 30b de leur position ouverte à leur position fermée.

Enfin, le premier demi-moule 30a et le deuxième demi-moule 30b peuvent être reliés à des sources fluidiques, notamment des sources de fluide caloporteur destinées à faire circuler à l'intérieur du moule 3 un fluide chaud pour permettre la chauffe du moule 3 ou, au contraire, un fluide réfrigérant permettant de refroidir le moule 3 lors de la fabrication des récipients 1. Cela permet notamment d'assurer des cadences élevées de production.

Pour cela, le moule 3 porte des raccords 35, visibles notamment sur la [Fig.4], permettent la communication fluidique entre la ou les sources fluidiques et le moule 3.

L'obtention d'un récipient 1 selon l'invention, au moyen d'un moule 3 tel que précédemment décrit, se fait par la mise en œuvre d'un procédé décrit ci-après.

Ce procédé comprend les étapes consistant à :
- former un tube T en roulant et soudant une feuille plastique sur elle-même,
- introduire le tube T dans un moule 3,
- fermer le moule 3,
- souffler le tube T dans le moule 3 pour obtenir un récipient 1.

En variante, le tube T pourrait être obtenu par extrusion et serait alors dépourvu de soudure S.

Dans ce procédé, le tube T présente un diamètre strictement supérieur à un diamètre du col 12 du récipient 1 à obtenir.

En d'autres termes, le col 12 est obtenu par pincement du tube T entre le premier demi-moule 30a et le deuxième demi-moule 30b, la matière plastique du tube T pincée entre le premier demi-moule 30a et le deuxième demi-moule 30b étant alors découpé par les moyens de découpe, c'est-à-dire par la bordure 34 et la surface de découpe 35.

Seule la portion de matière se trouvant dans la cavité de moulage peut alors être soufflée pour épouser au mieux les parois de la cavité de moulage.

Dans la cavité de moulage, et notamment dans la portion de la cavité de moulage destinée à former le corps 10 du récipient 1, la matière plastique constitutive du tube T est étirée par soufflage de sorte à épouser les parois de la cavité de moulage.

L'étirement de la matière se fait radialement à l'axe longitudinal X du récipient 1, et de manière plus importante dans la largeur L du récipient que dans sa profondeur P.

En d'autres termes, lorsque l'épaisseur du récipient est mesurée dans la portion centrale 104 de chacune de la première façade 101 et de la deuxième façade 102, l'épaisseur de la matière plastique constitutive du récipient est plus importante que dans les portions situées au voisinage des portions de liaison 103.

En d'autres termes, la matière plastique constitutive du tube T est plus étirée dans la largeur L du récipient 1, que dans sa profondeur P.

Lorsque le tube T est formé en roulant une feuille de matière plastique sur elle-même, la soudure S permettant d'obtenir le tube T est destinée à être orientée dans le moule de telle sorte qu'elle soit située au niveau de la portion centrale 104 de la première façade 101 du corps 10. La machine de fabrication peut notamment comprendre un système d'orientation du tube T dans le moule 3, permettant d'orienter la soudure S selon un souhait d'esthétisme.

Le fond 11 du récipient 1 est également obtenu par pincement du tube T et découpe de ce dernier par les moyens de découpe portés en partie par le deuxième insert 33.

Plus particulièrement, le pincement du tube T entre les deux demi-moules 30a, 30b permet de former la charnière 113.

Lorsque le soufflage est terminé, les deux demi-moules 30a, 30b sont positionnés dans leur position ouverte afin de permettre le retrait du récipient 1 formé et l'insertion d'un nouveau tube T pour débuter un nouveau cycle de production de récipient 1.

Pour le soufflage du tube T, une tuyère 4 est amenée dans ledit tube T afin d'injecter un fluide sous pression (notamment de l'air) à l'intérieur tu tube T lorsque le moule est dans sa position fermée. L'injection d'air permet de souffler le tube T, c'est-à-dire de l'étirer pour que sa matière vienne épouser les parois de la cavité de moulage, dans le but d'obtenir le récipient 1.

Le tube T est en outre pincé contre la tuyère 4 par l'intermédiaire de deux demi-disques, solidaires chacun du premier insert 32 de l'un du premier demi-moule 30a et du deuxième demi-moule 30b.

Le pincement du tube T entre les demi-disques 5 et la tuyère provoque le découpage de la matière plastique et donc la séparation du récipient 1 d'une carotte de matière plastique.

En outre, préalablement à l'insertion du tube T dans le moule 3, le tube T est chauffé de sorte à ramollir sa matière constitutive et permettre ainsi le soufflage et notamment assurer le fait que la matière constitutive du tube T puisse épouser la cavité de moulage.

Le procédé et le moule 3 qui viennent d'être décrits permettent d'obtenir un récipient 1 formé en une seule étape.

Plus précisément, le récipient 1 est formé dans son intégralité, c'est-à-dire que le corps 10, le fond 11, le col 12 et l'épaule 13 sont formés simultanément à partir d'une feuille plastique conditionnée sous forme d'une bobine.

Le coefficient d'étirage, c'est-à-dire le rapport entre l'épaisseur initiale du tube T et l'épaisseur de la paroi du corps 10 du récipient 1 est, à titre d'exemple illustratif et non limitatif, de l'ordre de 1,5 à 3.

Ce procédé permet également de limiter la quantité de matière plastique au niveau du col 12.

En effet, grâce aux moyens de découpe du moule 3, le surplus de matière au niveau du col 12 est retiré du récipient 1 final.

En outre, le procédé permet d'obtenir un récipient dont le col 12, l'épaule 13, le corps 10 et le fond 11 sont hermétiques à l'air.

De plus, ce procédé, permet d'obtenir un récipient 1 dont le col 12 est étanche avec un bouchon à lèvres par exemple ou avec tout autre moyen de fermeture tel qu'un opercule en aluminium.

Le récipient 1 selon l'invention permet d'obtenir un comportement semblable à une gourde de l'art antérieur constituée de feuillets d'aluminium et d'un organe d'aspiration en plastique.

Toutefois, le récipient 1 selon l'invention peut se différencier des gourdes selon l'art antérieur par sa forme qui est plus proche de celle d'une bouteille, mais également par le fait que, lorsque le produit contenu dans le récipient 1 est consommé, la quantité de produit résiduel après consommation, c'est-à-dire la quantité de produit restant dans l'emballage après consommation, est inférieure à la quantité de produit résiduel des gourdes de l'art antérieur.

A titre d'exemple illustratif et non limitatif, la quantité de produit résiduel dans un récipient selon l'invention est de l'ordre de 3 % du contenu total avant consommation, contrairement aux gourdes de l'art antérieur pour lesquelles la quantité de produit résiduel est généralement de l'ordre de 8 %.

En effet, grâce à la forme de son corps 10, et celle de son fond 11, le récipient 1 peut s'aplatir pour permettre l'extraction de produit par le col 12, cela par simple aspiration de la part d'un consommateur au niveau du col 12.

Ainsi, le consommateur n'a pas à interrompre son inspiration pour permettre une entrée d'air dans le récipient 1, favorable à l'extraction du produit qu'il contient.

De plus, un récipient dont ses différentes parties (le corps 10, le fond 11, le col 12 et l'épaule 13) sont venus de matière, permet de faciliter la conservation du produit notamment car chaque partie du récipient 1 forme une barrière à l'oxydation du produit par l'air.

En outre, un tel récipient peut présenter différentes formes, par exemple une forme de nounours, de ballon ou encore d'étoile, facilitant ainsi, pour le consommateur, sa différenciation dans les linéaires des supermarchés. Cette différenciation est impossible avec les gourdes actuelles.

## Revendications

1. Récipient (1) obtenu par soufflage d'un tube (T), le récipient (1) comprenant un corps (10) s'étendant, selon un axe longitudinal (X), entre un fond (11) et un col (12) venus de matière avec le corps (10), le récipient dans lequel le corps (10) présente, en hauteur selon l'axe longitudinal (X), une paroi dont l'épaisseur est comprise entre 0,05 mm et 0,4 mm, et en ce que le col (12) présente, en hauteur selon l'axe longitudinal (X), une paroi dont l'épaisseur est comprise entre 0,4 mm et 0,8 mm, **caractérisé en ce que** le tube (T) est obtenu par roulage d'une feuille de matière plastique, et **en ce que** le corps (10) définit une première façade (101) et une deuxième façade (102) reliées l'une à l'autre par une portion de liaison (103) à chacune de leurs extrémités, la première façade (101) présentant une soudure (S) du tube (T) roulé.

2. Récipient (1) selon la revendication précédente, **caractérisé en ce que** chacune de la première façade (101) et de la deuxième façade (102) présente une épaisseur décroissante depuis une portion centrale (104) vers chacune des deux portions de liaisons (103).

3. Récipient (1) selon l'une quelconque des revendications précédentes, **caractérisé en ce que** le fond (11) présente deux panneaux (111, 112) articulés l'un par rapport à l'autre autour d'une charnière (113), chaque panneau (111, 112) s'étendant entre la charnière (113) et l'une de la première façade (101) et de la deuxième façade (102), la charnière (113) reliant les deux portions de liaisons (103).

4. Récipient (1) selon l'une quelconque des revendications précédentes, **caractérisé en ce qu'**il est réalisé dans un matériau présentant des propriétés d'herméticité à l'oxygène.

5. Récipient selon l'une quelconque des revendications précédentes, **caractérisé en ce que** le col (12) présente un diamètre compris entre 8mm et 12mm, et une hauteur comprise entre 5 mm et 50mm.

6. Procédé de fabrication d'un récipient (1) selon l'une quelconque des revendications précédentes, le procédé comprenant les étapes consistant à :
- former un tube (T) en roulant et soudant une feuille sur elle-même,
- introduire le tube (T) dans un moule (3),
- fermer le moule (3),
- souffler le tube (T) dans le moule (3) pour obtenir un récipient (1),
**caractérisé en ce que** le tube (T) présente un diamètre strictement supérieur à un diamètre du col (12) du récipient (1) à obtenir.

7. Procédé selon la revendication précédente, **caractérisé en ce que**, préalablement à l'étape consistant à introduire le tube (T) dans un moule (3), le procédé comprend une étape consistant à chauffer le tube (T) formé.

## Patentansprüche

1. Behälter (1), der durch Blasformen eines Rohrs (T) erhalten wird, wobei der Behälter (1) einen Körper (10) umfasst, der sich entlang einer Längsachse (X) zwischen einem Boden (11) und einem Hals (12) erstreckt, die aus dem gleichen Material wie der Körper (10) bestehen, wobei der Behälter an dem Körper (10) auf Höhe entlang der Längsachse (X) eine Wand aufweist, deren Dicke zwischen 0,05 mm und 0,4 mm beträgt, und der Hals (12) auf Höhe entlang der Längsachse (X) eine Wand aufweist, deren Dicke zwischen 0,4 mm und 0,8 mm beträgt, **dadurch gekennzeichnet, dass** das Rohr (T) durch Rollen einer Kunststofffolie erhalten wird und dass der Körper (10) eine erste Frontseite (101) und eine zweite Frontseite (102) definiert, die durch einen Verbindungsabschnitt (103) an jedem ihrer Enden miteinander verbunden sind, wobei die erste Frontseite (101) eine Schweißnaht (S) des gerollten Rohrs (T) aufweist.

2. Behälter (1) nach dem vorhergehenden Anspruch, **dadurch gekennzeichnet, dass** die erste Frontseite (101) und die zweite Frontseite (102) jeweils eine abnehmende Dicke von einem zentralen Abschnitt (104) zu jedem der beiden Verbindungsabschnitte (103) aufweist.

3. Behälter (1) nach einem der vorhergehenden Ansprüche, **dadurch gekennzeichnet, dass** der Boden (11) zwei Platten (111, 112) aufweist, die um ein Scharnier (113) zueinander gelenkig sind, wobei sich jede Platte (111, 112) zwischen dem Scharnier (113) und einer der ersten Frontseite (101) und der zweiten Frontseite (102) erstreckt, wobei das Scharnier (113) die beiden Verbindungsabschnitte (103) verbindet.

4. Behälter (1) nach einem der vorhergehenden Ansprüche, **dadurch gekennzeichnet, dass** er aus einem Material mit sauerstoffdichten Eigenschaften hergestellt ist.

5. Behälter nach einem der vorhergehenden Ansprüche, **dadurch gekennzeichnet, dass** der Hals (12) einen Durchmesser zwischen 8 mm und 12 mm und eine Höhe zwischen 5 mm und 50 mm aufweist.

6. Verfahren zum Herstellen eines Behälters (1) nach einem der vorhergehenden Ansprüche, wobei das Verfahren die folgenden Schritte umfasst:
- Bilden eines Rohrs (T) durch Rollen und Verschweißen einer Folie auf sich selbst,
- Einführen des Rohrs (T) in eine Form (3),
- Schließen der Form (3),
- Blasen des Rohrs (T) in die Form (3), um einen Behälter (1) zu erhalten,
**dadurch gekennzeichnet, dass** das Rohr (T) einen Durchmesser aufweist, der strikt größer ist als ein Durchmesser des zu erhaltenden Halses (12) des Behälters (1).

7. Verfahren nach dem vorhergehenden Anspruch, **dadurch gekennzeichnet, dass** das Verfahren vor dem Schritt, der darin besteht, das Rohr (T) in eine Form (3) einzuführen, einen Schritt umfasst, der darin besteht, das gebildete Rohr (T) zu erwärmen.

## Claims

1. A container (1) obtained by blowing a tube (T), the container (1) comprising a body (10) extending, along a longitudinal axis (X), between a bottom (11) and a neck (12) made as one piece with the body (10), the container in which the body (10) has, in height along the longitudinal axis (X), a wall whose thickness is between 0.05 mm and 0.4 mm, and in that the neck (12) has, in height along the longitudinal axis (X), a wall whose thickness is between 0.4 mm and 0.8 mm, **characterised in that** the tube (T) is obtained by rolling a sheet of plastic material, and **in that** the body (10) defines a first frontage (101) and a second frontage (102) connected to each other by a connecting portion (103) at each of their ends, the first frontage (101) having a weld (S) of the tube (T) rolled.

2. The container (1) according to the preceding claim, **characterised in that** each of the first frontage (101) and the second frontage (102) has a thickness decreasing from a central portion (104) to each of the two connecting portions (103).

3. The container (1) according to any one of the preceding claims, **characterised in that** the bottom (11) has two panels (111, 112) articulated with respect to one another about a hinge (113), each panel (111, 112) extending between the hinge (113) and one of the first frontage (101) and the second frontage (102), the hinge (113) connecting the two connecting portions (103).

4. The container (1) according to any one of the preceding claims, **characterised in that** it is made of a material having oxygen-hermetic properties.

5. The container according to any one of the preceding claims, **characterised in that** the neck (12) has a diameter between 8 mm and 12 mm, and a height between 5 mm and 50 mm.

6. A method for manufacturing a container (1) according to any one of the preceding claims, the method comprising the steps of:
- forming a tube (T) by rolling and welding a sheet on itself,
- introducing the tube (T) into a mould (3),
- closing the mould (3),
- blowing the tube (T) into the mould (3) to obtain a container (1),
**characterised in that** the tube (T) has a diameter strictly greater than a diameter of the neck (12) of the container (1) to be obtained.

7. The method according to the preceding claim, **characterised in that**, prior to the step of introducing the tube (T) into a mould (3), the method comprises a step of heating the tube (T) formed.
